# NEUE EUROPÄISCHE PATENTSCHRIFT

(11) **EP 3 569 757 B2**
(45) Veröffentlichungstag und Bekanntmachung des Hinweises auf die Entscheidung über den Einspruch: **03.09.2025**
(45) Hinweis auf die Patenterteilung: 03.08.2022
(21) Anmeldenummer: 19170200.0
(22) Anmeldetag: 18.04.2019
(51) Int. Cl.: F24C 15/02, F25D 23/08

(54) **DICHTELEMENT MIT EINEM ABSCHLUSSTEIL IN DER FORM EINES RINGABSCHNITTS, TÜR MIT EINEM DICHTELEMENT SOWIE EIN HAUSHALTSGERÄT**
SEALING ELEMENT HAVING A CLOSURE ELEMENT IN THE FORM OF A RING SECTION, DOOR WITH A SEALING ELEMENT AND A HOUSEHOLD APPLIANCE
ÉLÉMENT D'ÉTANCHÉITÉ POURVU D'UNE PARTIE MARGINALE SOUS FORME DE SECTION ANNULAIRE, UNE PORTE DOTÉE D'UN ÉLÉMENT D'ÉTANCHÉITÉ AINSI QUE UN APPAREIL ÉLECTROMÉNAGER

(30) Priorität: 16.05.2018 DE 102018207625
(43) Veröffentlichungstag der Anmeldung: 20.11.2019
(73) Patentinhaber: BSH Hausgeräte GmbH, 81739 München (DE)
(72) Erfinder: Raab, Alfred, 73460 Hüttlingen (DE); Kümmel, Roland, 89191 Nellingen (DE); Elser, Oliver, 89551 Königsbronn (DE)

(56) Entgegenhaltungen:
- EP-A1- 2 829 827
- EP-A2- 2 515 059
- WO-A1-03/052334
- WO-A1-2014/086071
- KR-A- 20120 136 138
- US-A1- 2002 184 828

## Beschreibung

Die Erfindung, die im unabhängigen Anspruch 1 offenbart ist, betrifft ein Haushaltsgerät, insbesondere ein Haushaltskältegerät, mit einer Tür, die Tür mit einem Dichtelement. Das Dichtelement weist einen Verankerungskörper auf, mit welchem das Dichtelement in einer Verankerungsaufnahme der Tür verankert ist. Das Dichtelement weist darüber hinaus einen einstückig mit dem Verankerungskörper ausgebildeten Dichtungskörper auf, welcher mit zumindest einer Hohlkammer ausgebildet ist und welcher elastisch verformbar ist.

Dichtungselemente sind in vielfältigsten Ausgestaltungen bekannt, um im Hinblick auf die Abdichtung zwischen einer Tür und einem Korpus eines Haushaltsgeräts eine entsprechend funktionale Wirkung zu erzeugen.

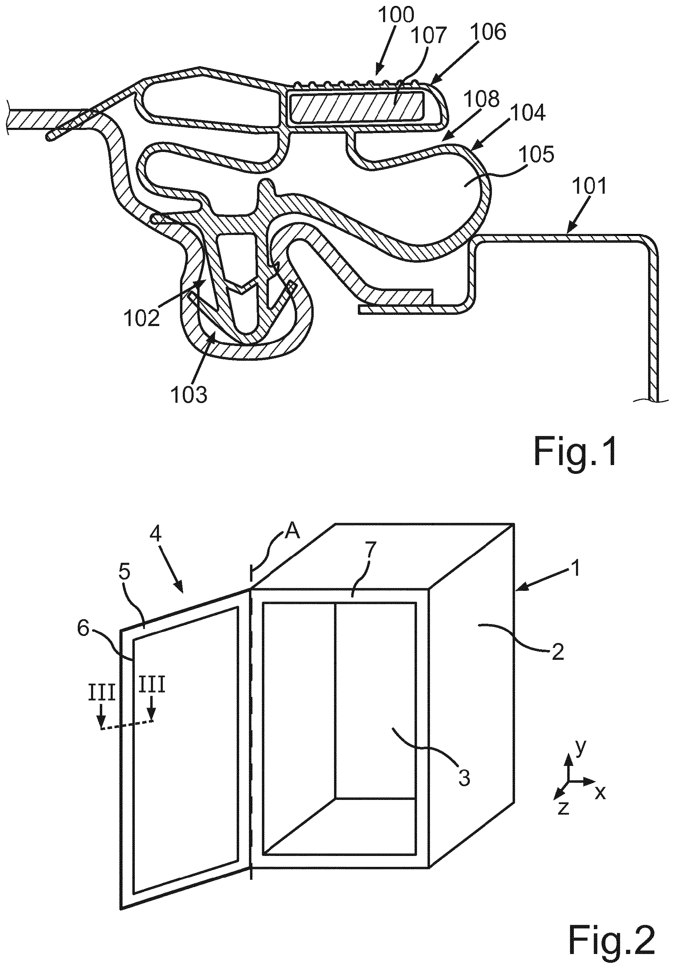

In dem Zusammenhang ist beispielsweise auch ein Dichtelement 100 bekannt, wie es in Fig. 1 gezeigt ist. Das Dichtelement 100 ist hier einstückig ausgebildet und an einer Tür 101 eines Haushaltsgeräts angeordnet. Das Dichtelement 100 weist einen Verankerungskörper 102 auf, der in einer Verankerungsaufnahme 103 der Tür 101 verankert ist. Das Dichtungselement 100 weist darüber hinaus einen Dichtungskörper 104 auf, der einstückig mit dem Verankerungskörper 102 verbunden ist. Der Dichtungskörper 104 ist hier knollenartig gebildet und mit einem Hohlraum 105 gestaltet, sodass er elastisch verformbar ist. Das Dichtelement 100 weist einen an dem Dichtungskörper 104 anschließenden Bereich 106 auf, in dem hier ein Magnet 107 angeordnet ist. Dadurch wird in magnetischer Wechselwirkung mit einem dichtelementexternen Magneten, der an dem Gehäuse des Haushaltsgeräts angeordnet ist, eine zusätzlich haltende Wirkung im geschlossenen Zustand der Tür erreicht. Wie in Fig. 1 zu erkennen ist, in der eine Schnittdarstellung des Dichtelements senkrecht zu dessen Längsachse gezeigt ist, ist zwischen dem knollenartigen Dichtungskörper 104 und diesem weiteren Bereich 106 ein Spalt 108 ausgebildet, der offen ist und in den somit Staub und Schmutz eintreten kann. Aus der WO 03/052334 A1 ist ein Dichtungselement mit Verankerungslaschen und einem daran anschließenden Teilbereich gebildet. Der anschließende Teilbereich ist als großer Block konzipiert.

Aus der WO 2014/086071 A1 ist ein Dichtelement mit einem Verankerungskörper gezeigt. An den Verankerungskörper schließt ein weiterer Teilbereich des Dichtelements an. Dieser weitere Teilbereich weist drei separate Finger auf, die als hohle Teile ausgebildet sind. Die Finger erstrecken sich im Wesentlichen geradlinig und sind von dem Verankerungskörper abgewandt.

Darüber hinaus ist aus der EP 2 515 059 A2 ein Dichtungselement mit einem Verankerungskörper bekannt. An den Verankerungskörper schließt ein voluminöser, nierenförmiger weiterer Teilbereich an. Dieser nierenförmige Teilbereich weist im Querschnitt gegenüberliegende C-förmige Hohlkammern auf. Die Hohlkammern sind vollständig innerhalb des nierenförmigen Bereichs angeordnet und ausgebildet.

Darüber hinaus ist aus der EP 2 829 827 A1 ein Dichtelement mit einem Verankerungskörper und einem daran anschließenden, hohlen weiteren Teilbereich gezeigt.

Des Weiteren sind aus der KR 2012 0136138 A und der US 2002 184828 A1 Dichtungen für Türen von Haushaltskältegeräten bekannt.

Darüber hinaus ist ein Dichtelement für eine Tür eines Haushaltskältegeräts aus der CN 201310149976 A bekannt. Dort ist der Bereich mit einem Magneten innenliegend in dem Dichtungskörper ausgebildet. Allerdings ist bei dieser Ausgestaltung vorgesehen, dass in dieser Schnittdarstellung ein dem Bereich mit dem Magneten gegenüberliegender Bereich des Dichtungskörpers gezackt beziehungsweise faltenbalgartig ausgebildet ist und diese Zacken praktisch gerade auf der Tür aufsitzen. Dadurch sind die Verformbarkeit und die Funktionalität des Dichtelements beim Anliegen an der Tür außerhalb des Verankerungskörpers beeinträchtigt. Aufgrund dieser Struktur ergibt sich eine gewisse steifere Ausgestaltung, sodass eine Türe beim Schließen durch einen gewissen Rückschlageffekt wieder aufgeschlagen werden kann.

Es ist Aufgabe der vorliegenden Erfindung, eine Tür für ein Haushaltsgerät zu schaffen, welche insbesondere bezüglich der oben genannten Einschränkungen verbessert ist.

Die vorliegende Erfindung ist im unabhängigen Anspruch 1 offenbart. Weitere Ausführungsbeispiele sind in den abhängigen Ansprüchen offenbart.

Die Erfindung, die im unabhängigen Anspruch 1 offenbart ist, betrifft ein Haushaltsgerät, insbesondere ein Haushaltskältegerät, mit einer Tür. Die Tür weist ein Dichtelement auf. Das Dichtelement weist einen Verankerungskörper auf, mit welchem das Dichtelement in einer Verankerungsaufnahme der Tür verankert ist. Das Dichtelement weist darüber hinaus einen mit dem Verankerungskörper einstückig ausgebildeten Dichtungskörper auf. Dieser Dichtungskörper ist im mit der Tür verankerten Zustand außerhalb der Verankerungsaufnahme angeordnet. Der Dichtungskörper ist mit zumindest einer Hohlkammer ausgebildet und elastisch verformbar. Der Dichtungskörper weist ein im Querschnitt des Dichtelements betrachtet außenseitiges Abschlussteil auf, welches im Querschnitt die Form eines Ringabschnitts aufweist. Dabei erstreckt sich somit dieses Abschlussteil als randseitiges Element des Dichtungselements. Es erstreckt sich darüber hinaus durch die Ausgestaltung als Ringabschnitt mit einer derartigen Geometrie, dass die Verformungselastizität verbessert ist und durch diesen Ringabschnitt selbst einerseits ein elastisches Verformen und Anliegen an die Tür ermöglicht, sodass hier ein spaltfreier Zustand zwischen einer Außenwand dieses Abschlussteils und der Tür ermöglicht ist, andererseits ein Spalt zwischen diesem Abschlussteil und weiteren Bereichen des Dichtungskörpers vermieden ist.

Es ist vorgesehen, dass das Abschlussteil ein erstes, frei auskragendes Ende aufweist und der Ringabschnitt so orientiert ist, dass dieses freie Ende dem Verankerungskörper zugewandt ist. Die Krümmung des Ringabschnitts ist somit zumindest derartig stark, dass dieses freie Ende nicht die Tür praktisch parallel wie die Verankerungsstruktur beziehungsweise der Verankerungskörper kontaktiert beziehungsweise kontaktieren kann, sondern so geformt ist, dass es sich durch die Ringabschnittgeometrie mit diesem freien Ende stets in Richtung zum Verankerungskörper hin orientiert und verformt. Das erste, frei auskragende Ende dieses Ringabschnitts ist somit insbesondere auch im geschlossenen Zustand der Tür und somit dann, wenn das Dichtelement auch an einem Flansch eines Gehäuses des Haushaltsgeräts anliegt, auf der im Querschnitt gegenüberliegenden Seite von der Tür beabstandet.

Die Krümmung des Ringabschnitts ist stets derartig ausgebildet, dass das freie Ende des Ringabschnitts berührungslos zur Tür angeordnet ist und lediglich eine Außenwand dieses Abschlussteils mit einem Kantenbereich der Tür in Kontakt ist.

Es ist der Verankerungskörper in die Verankerungsaufnahme der Tür aufgenommen und erstreckt sich somit in diese Verankerungsaufnahme hinein. Der Verankerungskörper weist einen oder mehrere nach außen abstehende Verankerungsstege auf, durch welche der Verankerungskörper in der Verankerungsaufnahme gehalten ist. Diese Verankerungsstege sind elastisch verformbare und frei auskragende Stege.

Es ist an die Verankerungsaufnahme anschließend ein Eintauchbereich an der Tür ausgebildet, in den der Ringabschnitt des Dichtelements eintauchend ausgebildet ist. und mit seinem frei auskragenden ersten Ende erstreckt sich dieser Ringabschnitt in diesen Eintauchbereich hinein. Der Eintauchbereich ist im Querschnitt der Tür betrachtet, in dem auch das Dichtelement im Querschnitt betrachtet ist, auf der der Verankerungsaufnahme abgewandten Seite durch eine Begrenzungswand begrenzt, welche ein oberes Wandende aufweist, an dem eine Außenwand des Ringabschnitts beim Komprimieren des Ringabschnitts anliegt und entlanggleitet. Dieses Wandende stellt auch den Kantenbereich dar, an dem die Außenwand des Ringabschnitts anliegt und somit auch das frei auskragende erste Ende des Ringabschnitts beabstandet und berührungslos zu diesem Eintauchbereich und somit auch zu diesem Wandende angeordnet ist. Es ist vorgesehen, dass diese Außenwand des Ringabschnitts auch im geöffneten Zustand der Tür an diesem Wandende beziehungsweise an diesem Kantenbereich anliegt, sodass durch diese Außenwand des Ringabschnitts der Eintauchbereich abgedeckt ist und somit spaltfrei vorliegt.

Es ist vorgesehen, dass der Ringabschnitt direkt in einen der Tür abgewandten Bereich des Dichtelements anmündet, insbesondere spaltfrei daran anmündet.

Es ist vorgesehen, dass das Abschlussteil hohl ausgebildet ist. Durch eine derartige Ausgestaltung ist die Verformungselastizität des Ringabschnitts verbessert. Darüber hinaus kann dieser Ringabschnitt dadurch gewichtsminimiert gestaltet werden.

Vorzugsweise ist vorgesehen, dass das Abschlussteil eine Außenwand aufweist, die stetig konvex gekrümmt ist. Insbesondere ist diese Außenwand über ihre gesamte Länge konvex gekrümmt. Durch eine derartige Ausgestaltung werden die oben genannten Vorteile besonders unterstützt.

Insbesondere ist vorgesehen, dass die Außenwand eine Azimutlänge und somit eine Umlauflänge um die Achse des Ringabschnitts aufweist, die zwischen 100° und 180° beträgt. Insbesondere dadurch ist auch die Form und Länge des Ringabschnitts an seiner Außenwand bevorzugt vorgegeben.

Vorzugsweise ist der Ringabschnitt Bestandteil eines Ringabschnittteils des Dichtungskörpers, und das Ringabschnittteil weist ein zweites, frei auskragendes Ende auf, welches dem ersten, frei auskragenden Ende des Ringabschnitts zugewandt ist. Auch dieses zweite, frei auskragende Ende ist außerhalb der Verankerungsaufnahme angeordnet. Die beiden frei auskragenden Enden dieses Ringabschnittteils sind vorteilhafterweise stets beabstandet zueinander angeordnet und somit berührungslos zueinander angeordnet. Das Ringabschnittteil ist somit ösenartig gestaltet und lediglich in radialer Richtung zu einer Achse des Ringabschnittteils betrachtet an einem kleinen azimutalen Spalt, der zwischen den zwei einander zugewandten frei auskragenden Enden gebildet ist, offen.

Durch eine derartige Ausgestaltung wird neben der Geometrie eine spezifische Verformungselastizität des Abschlussteils geschaffen, welches im besonderen Maße den oben genannten Vorteilen Rechnung trägt.

In vorteilhafter Weise ist vorgesehen, dass das Ringabschnittteil im Querschnitt des Dichtelements betrachtet C-förmig ausgebildet ist. Dies ist eine weitere Spezifikation, die die oben genannten Vorteile begünstigt.

Die Formgebungen des Dichtungskörpers wie auch der weiteren genannten Elemente des Dichtelements sind in einem Querschnitt betrachtet, der senkrecht zu einer Längsachse des Dichtelements gezogen ist.

Vorzugsweise erstreckt sich das Ringabschnittteil in diesem Querschnitt über eine Umlauflänge beziehungsweise Azimutlänge zwischen 300° und 340°. Es wird somit eine ringklammerförmige beziehungsweise greifzangenförmige Struktur des Ringabschnittteils gebildet.

In vorteilhafter Weise ist in dem Dichtungskörper ein Lagerbereich für zumindest einen Magneten ausgebildet, insbesondere einstückig ausgebildet. Dieser Lagerbereich stellt einen im Querschnitt abgeschlossenen Hohlkammerteil dar, wie er bereits oben erläutert wurde und welcher einstückig im Dichtelement ausgebildet ist und direkt und somit spaltfrei mit dem Ringabschnitt verbunden ist, und somit direkt an diesen angrenzt. Der Lagerbereich ist durch eine Trennwand separiert von dem Abschlussteil ausgebildet und im Querschnitt des Dichtelements betrachtet auf der dem Verankerungskörper gegenüberliegenden Seite an dem Ringabschnittteil ausgebildet. Das Ringabschnittteil mündet spaltfrei an diesen Lagerbereich an. Ein Eindringen von Staub oder Schmutz in einem Spalt zwischen dem Dichtungskörper und diesem Lagerbereich, wie es im Stand der Technik gemäß Fig. 1 erläutert wurde, kann daher vollständig vermieden werden. Gerade diese Ausführung ist daher besonders vorteilhaft.

Vorzugsweise ist vorgesehen, dass eine Außenwand des Ringabschnitts im Querschnitt des Dichtelements direkt und vorzugsweise stufenfrei an eine Außenwand des Lagerbereichs mündet beziehungsweise übergeht. Dadurch wird eine Krümmung der Außenwand des Ringabschnitts quasi stetig oder im Wesentlichen stetig in eine Außenwand des Lagerbereichs zumindest streckenweise abgebildet und weiter geführt. Dadurch wird im Querschnitt eine Gesamtaußenwand zwischen der Außenwand des Ringabschnitts und der daran direkt anschließenden Außenwand des Lagerbereichs gebildet, die unterbrechungsfrei und spaltfrei gestaltet ist. Dadurch wird bis zu dem dem Flansch des Gehäuses zugewandten äußeren Bereich des Dichtelements eine derartige gekrümmte Gesamtaußenwand geschaffen, die bei den oben genannten Aspekte in besonderer Weise die Vorteile, wie sie ebenfalls genannt wurden, ermöglicht.

Vorzugsweise ist vorgesehen, dass im Querschnitt des Dichtelements betrachtet seitlich an den Lagerbereich anschließend ein erster hohler Flügelkörper des Dichtungskörpers ausgebildet ist. Insbesondere bedeutet diese seitliche Anmündung des Flügelkörpers ein Anmünden an den Lagerbereich an dem dem Ringabschnitt gegenüberliegenden Ende des Lagerbereichs. Dieser hohle Flügelkörper verbessert die Dichtwirkung des Dichtelements.

Insbesondere ist der oben genannte Lagerbereich ein Hohlbereich, der im Querschnitt des Dichtelements betrachtet umlaufend vollständig geschlossen ist. In diese Hohlkammer ist der zumindest eine Magnet eingesetzt. Er ist in dem Zusammenhang somit separiert von weiteren Hohlkammern beziehungsweise Hohlprofilen des Dichtelements.

Vorzugsweise ist das gesamte Dichtelement einstückig ausgebildet, sodass in vorteilhafter Weise der Flügelkörper auch einstückig mit dem Lagerbereich, jedoch bezüglich der jeweiligen Hohlkammern beziehungsweise Hohlprofile separiert dazu ausgebildet ist.

In einer vorteilhaften Ausführung ist vorgesehen, dass von dem Flügelkörper ein hohlraumfreier Dichtungssteg frei auskragend absteht. Insbesondere ist im Querschnitt betrachtet dieser Dichtungssteg auf der dem Lagerbereich gegenüberliegenden Seite von dem Flügelkörper frei auskragend abstehend.

Dadurch wird eine weitere Anlage des Dichtelements an zusätzlichen Bereichen der Tür insbesondere im geschlossenen Zustand der Tür ermöglicht. Damit wird auch ein Abdichten zu Bereichen hin geschaffen, die durch die Dimensionierung und die Ausmaße des Flügelkörpers nicht mehr erreicht werden. Insbesondere dann, wenn zwischen dem Flügelkörper und einem weiteren Bereich des Dichtungskörpers ein Spalt ausgebildet ist, kann dieser Spalt durch den Dichtungssteg indirekt abgedeckt werden, indem dieser Dichtungssteg dann an der Türe beziehungsweise an einem Bereich der Tür anliegt, um dann auch den Spalt zwischen dem Türbereich und dem Flügelkörper abzudecken, sodass ein Spalt zwischen dem Flügelkörper und einem weiteren Bereich des Dichtelements, insbesondere des Dichtungskörpers, ebenfalls damit abgedeckt ist.

Es ist vorgesehen, dass an dem Verankerungskörper im Querschnitt des Dichtelements betrachtet direkt anschließend ein hohler Kompressionskörper des Dichtungskörpers ausgebildet ist, wobei an den Kompressionskörper das Abschlussteil direkt anschließt und wobei die Hohlkammer des Kompressionskörpers und die Hohlkammer des Abschlussteils eine gemeinsame Hohlkammer bilden. Nämlich ist bei dieser Ausgestaltung das Abschlussteil gleich oder im Wesentlichen gleich dem Ringabschnittteil.

Insbesondere ist zwischen dem Kompressionskörper und dem Flügelkörper ein Spalt ausgebildet. Der Flügelkörper und/oder der Kompressionskörper können als knollenartige Ausgestaltungen angesehen werden.

Das Haushaltskältegerät kann insbesondere ein Kühlgerät oder ein Gefriergerät oder ein Kühl-Gefrier-Kombigerät sein und somit zum Lagern und Konservieren von Lebensmitteln ausgebildet sein.

Mit den Angaben "oben", "unten", "vorne", "hinten, "horizontal", "vertikal", "Tiefenrichtung", "Breitenrichtung", "Höhenrichtung" sind die bei bestimmungsgemäßen Gebrauch und bestimmungsgemäßem Anordnen des Dichtelements beziehungsweise der Tür beziehungsweise des Geräts gegebenen Positionen und Orientierungen angegeben. Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert. Es zeigen:
Fig. 1 : eine Querschnittdarstellung eines bekannten Dichtelements an einer Tür eines Haushaltsgeräts, wobei diese Tür nicht ein Teil der vorliegenden Erfindung ist.
Fig. 2 : eine perspektivische vereinfachte Darstellung eines Ausführungsbeispiels eines Haushaltsgeräts gemäß der Erfindung; und
Fig. 3 : eine Querschnittdarstellung eines Ausführungsbeispiels einer Tür eines Haushaltsgeräts, wobei diese Tür ein Ausführungsbeispiel der Erfindung ist und wobei die Tür im geschlossenen Zustand gezeigt ist.

In den Figuren werden gleiche oder funktionsgleiche Elemente mit den gleichen Bezugszeichen versehen.

Alle technische Merkmale des unabhängigen Anspruchs 1 sind obligatorische Merkmale für alle Ausführungsbeispiele der Erfindung.

In Fig. 2 ist ein Ausführungsbeispiel eines Haushaltsgeräts 1 gezeigt, welches insbesondere ein Haushaltskältegerät sein kann. Das Haushaltsgerät 1 weist ein Gehäuse 2 auf, in dem zumindest ein Aufnahmeraum 3 ausgebildet ist. Der Aufnahmeraum 3 kann zum Lagern von Lebensmitteln vorgesehen sein und kann beispielsweise ein Kühlfach oder ein Gefrierfach sein.

Darüber hinaus weist das Haushaltsgerät 1 eine Tür 4 auf, die alle technische Merkmale des unabhängigen Anspruchs 1 aufweist und die schwenkbar an dem Gehäuse 2 angeordnet ist, hier insbesondere um eine in Höhenrichtung (y-Richtung) orientierte Achse A schwenkbar ist. An einer Innenseite 5 der Tür 4 ist ein Dichtelement 6 angeordnet. Das Dichtelement 6 liegt im geschlossenen Zustand der Tür 4 an einem Frontflansch 7 des Gehäuses 2 an. Das Dichtelement 6 ist vorzugsweise vollständig umlaufend ausgebildet, wie dies symbolhaft in Fig. 2 gezeigt ist.

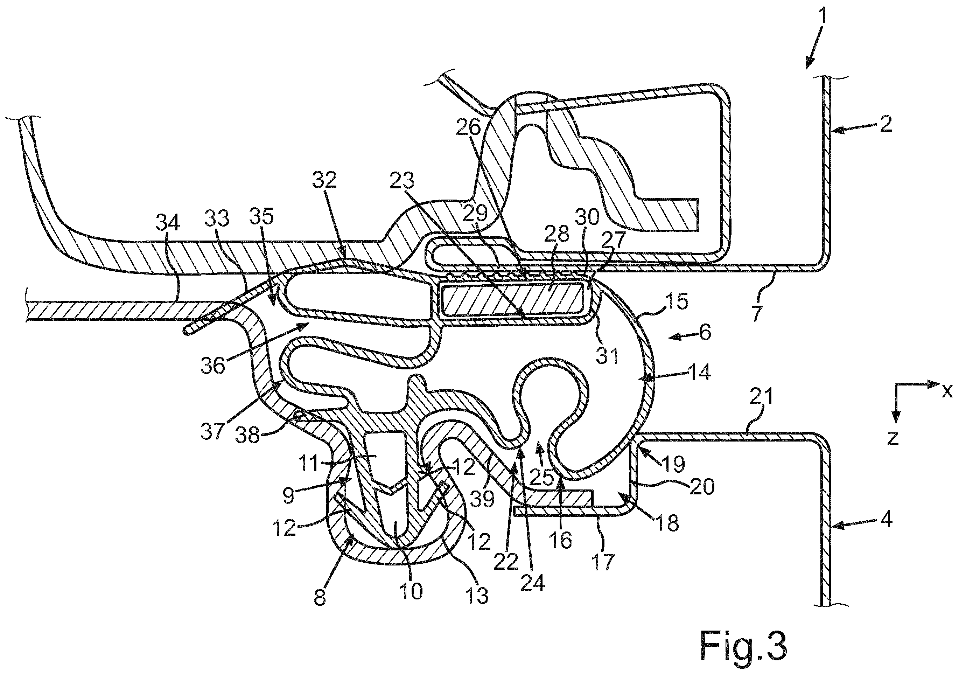

In Fig. 3 ist in einer Querschnittdarstellung das Dichtelement 6 gezeigt. Der Querschnitt ist somit in der x-z-Ebene, wie dies in Fig. 2 anhand der Schnittlinie III-III gezeigt ist, angeordnet. Im Unterschied zu Fig. 2 ist in der Querschnittdarstellung in Fig. 3 die Tür 4 geschlossen, sodass das Dichtelement 6 an dem bereits erläuterten Flansch 7 des Gehäuses 2 anliegt.

Wie zu erkennen ist, weist die Tür 4 eine Verankerungsaufnahme 8 auf, in welche ein Verankerungskörper 9 des Dichtelements 6 eingebracht ist und somit darin auch verankert ist. Der Verankerungskörper 9 des einstückig ausgebildeten Dichtelements 6 ist elastisch verformbar. Er weist hier vorzugsweise zwei Hohlkammern 10 und 11 auf. Der Verankerungskörper 9 weist darüber hinaus zumindest einen Verankerungssteg 12, hier mehrere Verankerungsstege 12, auf, die im gezeigten Querschnitt als frei auskragende Stege schräg zur Seite orientiert sind und entsprechend abstehend sind. Zur Verdeutlichung der Struktur des Dichtelements 6 im nicht verbauten Zustand ist in Fig. 3 der unverformte Zustand der Verankerungsstege 12 dargestellt (ebenso wie in der Darstellung gemäß Fig. 1). Selbstverständlich sind diese elastisch verformbaren Verankerungsstege 12 im verbauten Zustand in der Verankerungsaufnahme 8 verformt und liegen an einer Innenwand 13 der Verankerungsaufnahme 8 an. Wie zu erkennen ist, ist die Verankerungsaufnahme 8 als Rinne beziehungsweise als Nut ausgebildet.

Das Dichtelement 6 weist darüber hinaus ein in dem Querschnitt betrachtet als randseitiger beziehungsweise außenseitiger Abschluss ausgebildetes Abschlussteil 14 auf. Dieses Abschlussteil 14 schließt das Dichtelement 6 somit nach außen und somit hier zur Seite hin (in Breitenrichtung betrachtet) ab. Dieses Abschlussteil 14 weist in dieser Querschnittbetrachtung die Form eines Ringabschnitts auf. Dieses Abschlussteil 14 ist hohl ausgebildet, wie dies in Fig. 3 zu erkennen ist. Das Abschlussteil 14 weist eine Außenwand 15 auf, die hier stetig konvex gekrümmt ist, um die Form des Ringabschnitts zu bilden. Die Krümmung dieser Außenwand 15 ist derart, dass die Länge der Außenwand 15 in dieser Querschnittebene betrachtet zwischen 100° und 180° beträgt. Dies in Anbetracht eines Umlaufs der Außenwand 15 um eine senkrecht zur Figurenebene stehende Ringabschnittsachse.

Wie in Fig. 3 zu erkennen ist, weist das Abschlussteil 14 und somit auch der Ringabschnitt ein erstes, frei auskragendes Ende 16 auf. Der Ringabschnitt ist so orientiert, dass dieses erste freie Ende 16 dem Verankerungskörper 9 zugewandt ist. Die Krümmung ist daher so vorgegeben und derartig stark, dass dieses frei auskragende erste Ende 16 nicht im Wesentlichen parallel zum Verankerungskörper 9 und zu einem Boden 17 eines Eintauchbereichs 18 der Tür 4 orientiert ist, sondern diesbezüglich stärker gekrümmt ist und zum Verankerungskörper 9 hin gekrümmt ist.

Wie in Fig. 3 zu erkennen ist, ist dieses erste, frei auskragende Ende 16 auch im geschlossenen Zustand der Tür 4 beabstandet zu dem Boden 17 des Eintauchbereichs 18.

Der Eintauchbereich 18 ist als Mulde beziehungsweise rinnenartige Senke in der Tür 4 ausgebildet und stellt eine zur Verankerungsaufnahme 8 separate, jedoch insbesondere seitlich daran angrenzende Vertiefung dar. Sowohl im geschlossenen Zustand der Tür 4, als auch im geöffneten Zustand der Tür 4, erstreckt sich dieses Abschlussteil 14 in den Eintauchbereich 18 hinein. Es ist vorgesehen, dass die Außenwand 15 an einer Kante 19 direkt im Kontakt mit der Tür 4 ist. Diese Kontaktierung ist somit definiert und bewusst beabstandet zum frei auskragenden ersten Ende 16 gebildet. Die Kante 19 stellt einen Übergang zwischen einem oberen Wandende einer Begrenzungswand 20 des Eintauchbereichs 18 und einen daran anschließenden Wandbereich 21 der Tür 4 dar. Es ist also, wie in Fig. 3 zu erkennen ist, eine nur sehr kleine und insbesondere linienartige Kontaktierung zwischen der Tür 4 und einer Außenwand 15 des Abschlussteils 14 gebildet, wobei diese Kontaktierung dann auch noch deutlich beabstandet zum frei auskragenden ersten Ende 16 des Ringabschnitts gebildet ist. Eigentlich ist diese Kontaktierung auch im geöffneten Zustand der Tür 3 noch vorhanden. Durch diese Formgebung des Abschlussteils 14 und die spezifische Kontaktstelle mit der Tür 4 ist eine besonders vorteilhafte Verformungselastizität gegeben und eine besonders vorteilhafte Kraftübertragung beim Schließen der Tür 4 und somit beim Erreichen des Flansches 7 durch das Dichtelement 6 gegeben. Auch dadurch wird ein unerwünschter "Rebound"-Effekt vermieden, der beim Schließen der Tür 4 aufgrund der nicht ausreichenden Verformungselastizität das Dichtelements 6 insbesondere im Bereich des Dichtungskörpers 22 beim Wiederaufschlagen der Tür 4 nach sich ziehen würde.

Wie darüber zu erkennen ist, weist der Dichtungskörper 22 den Ringabschnitt als Abschlussteil 14 auf, wobei dieser Ringabschnitt Bestandteil eines Ringabschnittteils 23 des Dichtungskörpers 22 ist. Dieses Ringabschnittteil 23 ist auch das Abschlussteil 14.

Dieses Ringabschnittteil 23 weist in der vorgesehenen Ausführung in vorteilhafter Ausführung ein zweites, frei auskragendes Ende 24 auf, welches insbesondere hohl ausgebildet ist. Wie in Fig. 3 im Querschnitt zu erkennen ist, ist insbesondere im geschlossenen Zustand das zweite, frei auskragende Ende 24 dem ersten frei auskragenden Ende 16 zugewandt orientiert, jedoch berührungslos und beabstandet dazu ausgebildet. In diesem geschlossenen Zustand der Tür 4 ist lediglich ein kleiner Spalt 25 zwischen den einander zugewandten Enden 16 und 24 gebildet. Insbesondere im geschlossenen Zustand der Tür 4 ist in dieser Querschnittdarstellung das Ringabschnittteil 23 C-förmig ausgebildet. In vorteilhafter Weise ist auch bei geöffneter Tür 4 diese C-Form des Ringabschnittteils 23 vorhanden, sodass sich in dem Zusammenhang der Spalt 25 im geöffneten Zustand der Tür 4 nur geringfügig öffnet.

Es ist vorgesehen, dass die Außenwand 15 an der Stelle 19 entlanggleiten kann und somit beim Schließen und Öffnen der Tür 4 durch diese Kante 19 eine gewisse Führung für die Verformbarkeit des Ringabschnitts bildet.

Vorzugsweise erstreckt sich das Ringabschnittteil 23 in Umlaufrichtung um eine senkrecht zur Figurenebene stehende Achse zwischen dem ersten freien Ende 16 und dem zweiten freien Ende 24 über eine Umlauflänge zwischen 300° und 340°, was insbesondere für den Zustand gilt, wenn die Tür 4 geschlossen ist.

In vorteilhafter Weise ist in dem Dichtungskörper 22 ein Lagerbereich 26 einstückig ausgebildet. Dieser Lagerbereich 26 stellt ebenfalls eine Hohlkammer 27 bereit, in welcher zumindest ein Magnet 28 angeordnet ist. Dieser Magnet 28 kann mit einem magnetisch wirkenden Bereich 29 des Flansches 7 wechselwirken, um die geschlossene Stellung der Tür 4 zu unterstützen.

Der Lagerbereich 26 ist mit seiner Hohlkammer 27 getrennt von der Hohlkammer des Ringabschnitts und somit auch von der Hohlkammer des Ringabschnittteils 23. Wie zu erkennen ist, mündet die Außenwand 15 direkt und unterbrechungsfrei und somit auch spaltfrei an eine Außenwand 30 des Lagerbereichs 26. Insbesondere ist diese Außenwand 30 zumindest bereichsweise auch gekrümmt, sodass vorzugsweise die Krümmung der Außenwand 15 in dem Lagerbereich 26 in dieser Querschnittbetrachtung abschnittsweise durchgeführt wird.

Die Hohlkammer 27 und die Hohlkammer des Ringabschnitts 14 sind lediglich durch eine ausgebildete Trennwand 31 getrennt. Außenseitig ist der Übergang zwischen dem Lagerbereich 26 und dem Ringabschnitt beziehungsweise Abschlussteil 14 spaltfrei und somit auch unterbrechungsfrei ausgebildet.

In Tiefenrichtung und somit in z-Richtung betrachtet ist eine gesamte Außenwand des Dichtelements 6 beginnend von dem freien ersten Ende 16 des Abschlussteils 14 bis zu demjenigen Bereich des Dichtelements 6, der dem Flansch 7 zugewandt ist und somit der Tür 4 abgewandt ist, als stetig gekrümmter Bereich, der sich vorzugsweise über eine Umlauflänge um größer oder gleich 150° erstreckt und über die in dieser Tiefenrichtung bemessenen Maße des Dichtungskörpers 22 vollständig erstreckt,ausgebildet.

Vorzugsweise ist vorgesehen, dass das Dichtelement 6, insbesondere der Dichtungskörper 22, einen an den Lagerbereich 26 anschließenden hohlen Flügelkörper 32 aufweist. In der Querschnittbetrachtung schließt dieser Flügelkörper 32 an der dem Abschlussteil 14 gegenüberliegenden Seite am Lagerbereich 26 direkt an. Insbesondere ist dieser Flügelkörper 32 knollenartig gestaltet. An diesen Flügelkörper 32 ist in vorteilhafter Weise ein hohlraumfreier Dichtungssteg 33 einstückig angeformt, der sich auf der im Querschnitt betrachtet gegenüberliegenden Seite des Lagerbereichs 26 von dem Flügelkörper 32 frei auskragend wegerstreckt. In der Darstellung in Fig. 3 ist der Dichtungssteg 33 in seiner unverformten Grundstellung gezeigt, wenn das Dichtungselement 6 noch nicht an der Tür 4 verbaut ist. Im verbauten Zustand ist das Dichtungselement 6 so angeordnet, dass der Dichtungssteg 33 in einem Wandbereich 34 der Tür 4 liegt und diesbezüglich entsprechend verformt ist. Durch diesen Dichtungssteg 33 wird ein Spalt 35 zwischen dem Flügelkörper 32 und der Tür 4 verschlossen, sodass auch ein weiterer nach außen hin offener Spalt 36 zwischen dem Flügelkörper 32 und einem dazu separaten Kompressionskörper 37 des Dichtungskörpers 22 ebenfalls verschlossen ist. Der Kompressionskörper 37 ist ebenfalls insbesondere knollenartig ausgebildet und erstreckt sich in der Querschnittbetrachtung gemäß Fig. 3 dem Ringabschnittteil 23 abgewandt. In der hier gezeigten Ausführung ist der hohle Kompressionskörper 37 so gestaltet, dass sein Hohlraum einstückig mit dem Hohlraum des Ringabschnittteils 23 verbunden ist und somit ein gemeinsamer, zusammenhängender Hohlraum gebildet ist. Der Kompressionskörper 37 schließt direkt an den Verankerungskörper 9 an, wie dies in Fig. 3 zu erkennen ist.

Es ist durch die Kante 19 ein oberes Wandende der Begrenzungswand 20 gebildet.

Wie in Fig. 3 gezeigt ist, ist ein weiterer Dichtungssteg 38 an dem Verankerungskörper 9 ausgebildet, der etwas außerhalb der Verankerungsaufnahme 8 im verbauten Zustand sich befindet, sodass die Verankerungsaufnahme 8 quasi durch diesen Dichtungssteg 38 abgedeckt ist. Dieser Dichtungssteg 38 ist in seinem unverformten Zustand gezeigt, wenn das Dichtungselement 6 noch nicht an der Tür 4 verbaut wäre.

Wie in Fig. 3 auch zu erkennen ist, ist bei geschlossener Tür 4 das zweite, frei auskragende Ende 24 ebenfalls berührungslos zu dem Boden 17 als auch zu einer weiteren seitlichen Begrenzungswand 39 des Eintauchbereichs 18 angeordnet.

### Bezugszeichenliste

- 1 :: Haushaltsgerät
- 2 :: Gehäuse
- 3 :: Aufnahmeraum
- 4 :: Tür
- 5 :: Innenseite
- 6 :: Dichtelement
- 7 :: Frontflansch
- 8 :: Verankerungsaufnahme
- 9 :: Verankerungskörper
- 10 :: Hohlkammer
- 11 :: Hohlkammer
- 12 :: Verankerungssteg
- 13 :: Innenwand
- 14 :: Abschlussteil
- 15 :: Außenwand
- 16 :: erstes freies Ende
- 17 :: Boden
- 18 :: Eintauchbereich
- 19 :: Kante
- 20 :: Begrenzungswand
- 21 :: Wandbereich
- 22 :: Dichtungskörper
- 23 :: Ringabschnittteil
- 24 :: zweites freies Ende
- 25 :: Spalt
- 26 :: Lagerbereich
- 27 :: Hohlkammer
- 28 :: Magnet
- 29 :: Bereich
- 30 :: Außenwand
- 31 :: Trennwand
- 32 :: Flügelkörper
- 33 :: Dichtungssteg
- 34 :: Wandbereich
- 35 :: Spalt
- 36 :: Spalt
- 37 :: Kompressionskörper
- 38 :: Dichtungssteg
- 39 :: Begrenzungswand
- 100 :: Dichtelement
- 102 :: Tür
- 102 :: Verankerungskörper
- 103 :: Verankerungsaufnahme
- 104 :: Dichtungskörper
- 105 :: Hohlraum
- 106 :: Bereich
- 107 :: Magnet

## Patentansprüche

1. Haushaltsgerät (1), insbesondere Haushaltskältegerät, mit einer Tür (4), die Tür (4) mit zumindest einem Dichtelement (6), welches einen Verankerungskörper (9) und einen einstückig mit dem Verankerungskörper (9) ausgebildeten Dichtungskörper (22) aufweist, welcher mit zumindest einer Hohlkammer ausgebildet ist und welcher elastisch verformbar ist wobei der Dichtungskörper (22) ein im Querschnitt des Dichtelementes (6) betrachtet außenseitiges, hohles Abschlussteil (14) aufweist, welches im Querschnitt die Form eines Ringabschnitts aufweist, wobei das Abschlussteil (14) ein erstes frei auskragendes Ende (16) aufweist, und der Ringabschnitt so orientiert ist, dass das erste freie Ende (16) dem Verankerungskörper (16) zugewandt gekrümmt ist, und der Verankerungskörper (9) in einer Verankerungsaufnahme (8) aufgenommen ist und an die Verankerungsaufnahme (8) anschließend ein Eintauchbereich (18) an der Tür (4) für den Ringabschnitt des Dichtelements (6) ausgebildet ist, in welchen der Ringabschnitt mit seinem frei auskragenden ersten Ende (16) sich hinein erstreckt, wobei der Eintauchbereich (18) im Querschnitt der Tür (4) betrachtet auf der der Verankerungsaufnahme (8) abgewandten Seite durch eine Begrenzungswand (20) begrenzt ist, welche ein oberes Wandende (19) aufweist, wobei eine Außenwand (15) des Ringsabschnitts an dem oberen Wandende (19) der Begrenzungswand (20) direkt im Kontakt mit der Tür (4) ist, wobei diese Kontaktierung beabstandet zum frei auskragenden ersten Ende (16) gebildet ist, wobei an dem oberen Wandende (19) der Begrenzungswand (20) die Außenwand (15) des Ringabschnitts beim Komprimieren des Ringabschnitts beim Schließen der Tür (4) und dem Anschlagen des Dichtelements (6) an einer Gehäusewand (7) des Haushaltsgeräts (1) entlanggleitet.

2. Haushaltsgerät (1)nach Anspruch 1, **dadurch gekennzeichnet, dass** das Abschlussteil (14) die Außenwand (15) aufweist, die stetig konvex gekrümmt ist, insbesondere über ihre gesamte Länge.

3. Haushaltsgerät (1)nach Anspruch 2, **dadurch gekennzeichnet, dass** die Außenwand (15) im Querschnitt betrachtet spaltfrei in eine, die Krümmung der Außenwand (15) zumindest abschnittweise aufnehmende, Außenwand (30) eines direkt an den Ringabschnitt anschließenden hohlen Lagerbereichs (26) des Dichtelements (6) anmündet.

4. Haushaltsgerät (1)nach einem der vorhergehenden Ansprüche, **dadurch gekennzeichnet, dass** der Ringabschnitt als Abschlussteil (14) Bestandteil eines Ringabschnittteils (23) des Dichtungskörpers (22) ist, und das Ringabschnittteil (23) ein zweites, frei auskragendes Ende (24) aufweist, welches dem ersten frei auskragenden Ende (16) des Ringabschnitts zugewandt ist.

5. Haushaltsgerät (1)nach Anspruch 4, **dadurch gekennzeichnet, dass** das Ringabschnittteil (23) im Querschnitt des Dichtelements (6) betrachtet C-förmig ausgebildet ist.

6. Haushaltsgerät (1)nach Anspruch 4 oder 5, **dadurch gekennzeichnet, dass** sich das Ringabschnittteil (23) über eine Umlauflänge um eine senkrecht zum Querschnitt stehende Längsachse des Dichtelements (6) zwischen 300° und 340° erstreckt.

7. Haushaltsgerät (1)nach einem der vorhergehenden Ansprüche 4 bis 6, **dadurch gekennzeichnet, dass** in dem Dichtungskörper (22) ein Lagerbereich (26) für zumindest einen Magneten (28) einstückig ausgebildet ist, wobei der Lagerbereich (26) bezüglich deren Hohlkammern separiert von dem Abschlussteil (14) ausgebildet ist und im Querschnitt betrachtet auf der dem Verankerungskörper (9) gegenüberliegenden Seite an dem Ringabschnittteil (23) ausgebildet ist.

8. Haushaltsgerät (1)nach Anspruch 7, **dadurch gekennzeichnet, dass** im Querschnitt seitlich an den Lagerbereich (26) anschließend ein erster hohler Flügelkörper (32) des Dichtungskörpers (22) ausgebildet ist.

9. Haushaltsgerät (1)nach Anspruch 8, **dadurch gekennzeichnet, dass** von dem Flügelkörper (32) ein hohlraumfreier Dichtungssteg (33) frei auskragend absteht.

10. Haushaltsgerät (1)nach einem der vorhergehenden Ansprüche, **dadurch gekennzeichnet, dass** an den Verankerungskörper (9) im Querschnitt betrachtet direkt anschließend ein hohler Kompressionskörper (37) des Dichtungskörpers (22) ausgebildet ist, wobei an den Kompressionskörper (37) ein das Abschlussteil (14) aufweisendes Ringabschnittteil (23) direkt anschließt, wobei die Hohlkammer des Kompressionskörpers (37) und die Hohlkammer des Abschlussteils (14) eine gemeinsame Hohlkammer bilden.

## Claims

1. Household appliance (1), in particular household refrigeration appliance (1), with a door (4), the door (4) with at least one sealing element (6), which has a fixing body (9) and a sealing body (22), embodied in one piece with the fixing body (9), which is embodied with at least one hollow chamber and which is elastically deformable, wherein viewed in the cross-section of the sealing element (6), the sealing body (22) has an exterior, hollow end piece (14) which has the shape of a ring section in the cross-section, wherein the end piece (14) has a first freely projecting end (16), and the ring section is oriented such that the first free end (16) is curved facing the fixing body (16) and the fixing body (9) is received in a fixing receptacle (8), and at the fixing receptacle (8) an immersion region (18) is then embodied on the door (4) for the ring section of the sealing element (6), into which the ring section extends with its freely projecting first end (16), wherein viewed in the cross-section of the door (4) the immersion region (18) is bound by a boundary wall (20) on the side facing away from the fixing receptacle (8), which boundary wall has an upper wall end (19), wherein on the upper wall end (19) of the boundary wall (20) an outer wall (15) of the ring section is in direct contact with the door (4), wherein this contacting is formed at a distance from the freely projecting first end (16), wherein when the ring section is compressed when the door (4) is closed and the sealing element (6) attaches to a housing wall (7) of a household appliance (1), the outer wall (15) of the ring section slides along the upper wall end (19) of the boundary wall (20).

2. Household appliance (4) according to claim 1, **characterised in that** the end piece (14) has the outer wall (15) which is continuously convexly curved, in particular across its entire length.

3. Household appliance (4) according to claim 2, **characterised in that** the outer wall (15), viewed in the cross-section, leads without gaps into an outer wall (30), which receives the curvature of the outer wall (15) at least in sections, of a hollow storage area (26) of the sealing element (6) which directly adjoins the ring section.

4. Household appliance (4) according to one of the preceding claims, **characterised in that** as an end piece (14) the ring section is an integral part of a ring section piece (23) of the sealing body (22) and the ring section piece (23) has a second, freely projecting end (24), which is facing the first freely projecting end (16) of the ring section.

5. Household appliance (4) according to claim 4, **characterised in that** the ring section piece (23) is embodied to be C-shaped viewed in the cross-section of the sealing element (6).

6. Household appliance (4) according to claim 4 or 5, **characterised in that** the ring section piece (23) extends across a peripheral length about a longitudinal axis, which is at right angles to the cross-section, of the sealing element (6) of between 300° and 340°.

7. Household appliance (4) according to one of the preceding claims 4 to 6, **characterised in that** in the sealing body (22) a storage area (26) for at least one magnet (28) is embodied in one piece, wherein the storage area (26) is embodied separately from the end piece (14) with respect to its hollow chambers and viewed in the cross-section is embodied on the side facing the fixing body (9) on the ring section piece (23).

8. Household appliance (4) according to claim 7, **characterised in that** in the cross-section a first hollow blade body (32) of the sealing body (22) is embodied laterally on the storage area (26).

9. Household appliance (4) according to claim 8, **characterised in that** a cavity-free sealing web (33) sticks out in a freely projecting manner from the blade body (32).

10. Household appliance (4) according to one of the preceding claims, **characterised in that** viewed cross-sectionally, a hollow compression body (37) of the sealing body (22) is embodied directly on the fixing body (9), wherein a ring section piece (23) having the end piece (14) directly attaches to the compression body (37), wherein the hollow chamber of the compression body (37) and the hollow chamber of the end piece (14) form a shared hollow chamber.

## Revendications

1. Appareil ménager (1), en particulier un appareil ménager frigorifique, avec une porte (4), la porte (4) avec au moins un élément d'étanchéité (6), lequel présente un corps d'ancrage (9) et un corps d'étanchéité (22) formé en une seule pièce avec le corps d'ancrage (9), lequel corps d'étanchéité est formé avec au moins une chambre creuse et lequel est déformable élastiquement, dans laquelle le corps d'étanchéité (22) présente, vu dans la section transversale de l'élément d'étanchéité (6), une pièce terminale (14) extérieure creuse, laquelle présente en section transversale la forme d'un segment annulaire, dans laquelle la pièce terminale (14) présente une première extrémité faisant librement saillie (16) et la section annulaire est orientée de sorte que la première extrémité libre (16) est dirigée de façon courbée vers le corps d'ancrage (9), et le corps d'ancrage (9) est logé dans un logement d'ancrage (8) et une zone d'insertion (18) est formée de manière contiguë au logement d'ancrage (8) sur la porte (4) pour la section annulaire de l'élément d'étanchéité (6), à l'intérieur de laquelle zone d'insertion la section annulaire s'étend avec sa première extrémité faisant librement saillie (16), dans laquelle la zone d'insertion (18) est, vue dans la section transversale de la porte (4), délimitée sur le côté éloigné du logement d'ancrage (8) par une paroi de délimitation (20) qui présente une extrémité de paroi supérieure (19), dans laquelle une paroi extérieure (15) de la section annulaire se trouve, en l'extrémité de paroi supérieure (19) de la paroi de délimitation (20), en contact direct avec la porte (4), dans laquelle ce contact est formé à distance de la première extrémité faisant librement saillie (16), dans laquelle la paroi extérieure (15) de la section annulaire glisse le long de l'extrémité de paroi supérieure (19) de la paroi de délimitation (20) lors de la compression de la section annulaire intervenant à la fermeture de la porte (4) et de la butée de l'élément d'étanchéité (6) sur une paroi de carcasse (7) de l'appareil ménager (1).

2. Appareil ménager (1) selon la revendication 1, **caractérisée en ce que** la pièce terminale (14) présente la paroi extérieure (15), continuellement convexe, en particulier sur toute sa longueur.

3. Appareil ménager (1) selon la revendication 2, **caractérisée en ce que** la paroi extérieure (15), débouche, vue en section transversale, sans jeu dans une paroi extérieure (30) d'une zone d'appui (26) de l'élément d'étanchéité (6) creuse directement contiguë à la section annulaire, qui accueille au moins par sections la courbure de la paroi intérieure (15).

4. Appareil ménager (1) selon l'une des revendications précédentes, **caractérisée en ce que** la section annulaire fait partie sous forme de pièce terminale (14) d'une partie de section annulaire (23) du corps d'étanchéité (22) et la partie de section annulaire (23) présente une deuxième extrémité faisant librement saillie (24), laquelle est dirigée vers la première extrémité faisant librement saillie (16) de la section annulaire.

5. Appareil ménager (1) selon la revendication 4, **caractérisée en ce que** la partie de section annulaire (23) est, vue en section transversale de l'élément d'étanchéité (6), formée en forme de C.

6. Appareil ménager (1) selon la revendication 4 ou 5, **caractérisée en ce que** la partie de section annulaire (23) s'étend sur une longueur circulaire autour d'un axe longitudinal de l'élément d'étanchéité (6) perpendiculaire à la section transversale, entre 300° et 340°.

7. Appareil ménager (1) selon l'une des revendications précédentes 4 à 6, **caractérisée en ce qu'**une zone d'appui (26) pour au moins un aimant (28) est formée en une seule pièce dans le corps d'étanchéité (22), dans laquelle la zone d'appui (26) est, concernant ses chambres creuses, formée séparément de la pièce terminale (14) et formée, vue en section transversale, sur le côté opposé au corps d'ancrage (9), sur la partie de section annulaire (23).

8. Appareil ménager (1) selon la revendication 7, **caractérisée en ce qu'**un premier corps à ailettes creux (32) du corps d'étanchéité (22) est formé dans la section transversale, en contiguïté latérale avec la zone d'appui (26).

9. Appareil ménager (1) selon la revendication 8, **caractérisée en ce qu'**une âme d'étanchéité exempte de cavité (33) fait librement saillie du corps à ailettes (32).

10. Appareil ménager (1) selon l'une des revendications précédentes, **caractérisée en ce qu'**un corps de compression creux (37) du corps d'étanchéité (22) est, vu en section transversale, formé de façon directement contiguë sur le corps d'ancrage (9), dans laquelle une partie de section annulaire (23) présentant la pièce terminale (14) est directement contiguë au corps de compression (37), dans laquelle les chambres creuses du corps de compression (37) et les chambres creuses de la pièce terminale (14) forment une chambre creuse commune.
